# EUROPEAN PATENT APPLICATION

(11) **EP 4 455 197 A1**
(43) Date of publication of application: **30.10.2024**
(21) Application number: 23170656.5
(22) Date of filing: 28.04.2023
(51) Int. Cl.: C08J 9/00, B29C 44/34, C08J 9/12, C08L 25/06, C08L 71/10

(54) **COMPOSITION, METHOD FOR THE MANUFACTURE THEREOF, AND ARTICLES COMPRISING THE COMPOSITION**

(71) Applicant: SHPP Global Technologies B.V., 4612 PX Bergen op Zoom (NL)
(72) Inventor: Hou, Jingqiang, Shanghai (CN); Mao, Rui, Shanghai (CN); Liu, Chao, Shanghai (CN); Zheng, Liping, Shanghai (CN)
(74) Representative: Balder IP Law, S.L.

(57) **Abstract**

A composition includes particular amounts of a polyphenylene ether, a polystyrene, a block copolymer of an alkenyl aromatic and a conjugated diene, and a flame retardant. The composition, after foaming with a blowing agent, has a density of less than 0.5 g/cm³. Methods of making the composition are also described.

## Description

### BACKGROUND

Polyphenylene ether resins are known as high performance engineering thermoplastics possessing high melt viscosities and softening points which makes them useful for many applications where resistance to high temperatures is desired, and it is well known that properties of the polyphenylene ether resins can be altered materially by blending with other resin materials.

Foamed articles are of interest for a variety of application. For example, light weight, high strength, and flame retardant materials are particularly desirable for use in the electric vehicle industry. Existing foamed compositions, for example based on polyolefins, polystyrene, or other thermoplastics, fail to provide the desired level of flame retardancy and heat resistance, thus limiting the utility of these materials in certain applications.

It would be desirable to provide a foamed composition exhibiting a particular combination of properties. Providing a low density, flame retardant foamed article would be especially advantageous.

### SUMMARY

A composition comprises 20 to 70 weight percent of a polyphenylene ether; 20 to 60 weight percent of a polystyrene; 0.1 to 15 weight percent of a block copolymer of an alkenyl aromatic and a conjugated diene; and 1 to 25 weight percent of a flame retardant; wherein weight percent of each component is based on the total weight of the composition; and wherein the composition, after foaming with a blowing agent, has a density of less than 0.5 g/cm³, or 0.05 to 0.4 g/cm³.

A method of making a composition comprises melt mixing in an extruder 20 to 70 weight percent of a polyphenylene ether; 20 to 60 weight percent of a polystyrene; 0.1 to 15 weight percent of a block copolymer of an alkenyl aromatic and a conjugated diene; and 1 to 25 weight percent of a flame retardant; to provide a first mixture, wherein weight percent of each component is based on the total weight of the first mixture; introducing a blowing agent into the extruder; mixing the blowing agent and the mixture in the extruder to provide a second mixture; cooling the second mixture, optionally in a second extruder; and foaming the second mixture through a die to provide the composition.

An article comprising the composition represents another aspect of the present disclosure.

The above described and other features are exemplified by the following detailed description.

### DETAILED DESCRIPTION

Polyphenylene ether is a foamable thermoplastic material. Previous methods of producing polyphenylene ether foams use foaming of beads of polyphenylene ether. Materials produced by such a method generally exhibit low strength, low production efficiency, and high cost. Extrusion foaming processes can improve production efficiency of preparing foamed materials, however particular compositions and process parameters must be selected to provide the desired foamed material. Accordingly, there remains a continuing need in the art for improved methods of producing polyphenylene ether foams that are light weight, heat resistant, and flame retardant. It would be a further advantage to provide the polyphenylene ether foamed compositions using an extrusion foaming process.

The present inventors have advantageously discovered particular compositions and processes that can address the above-described technical limitations to provide improved polyphenylene ether foamed compositions. In particular, a composition includes particular amounts of a polyphenylene ether, a polystyrene, a block copolymer of an alkenyl aromatic and a conjugated diene, and a flame retardant. The composition is prepared using an extrusion foaming process. A significant improvement is therefore provided by the present disclosure.

Accordingly, a composition represents an aspect of the present disclosure. The foamed composition comprises a polyphenylene ether. The polyphenylene ether comprises phenylene ether units having the structure 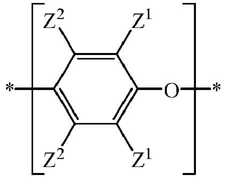 wherein each occurrence of Z¹ is independently halogen, unsubstituted or substituted C₁₋₁₂ hydrocarbyl, provided that the hydrocarbyl group is not tertiary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms; and each occurrence of Z² is independently hydrogen, halogen, unsubstituted or substituted C₁₋₁₂ hydrocarbyl provided that the hydrocarbyl group is not tertiary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms. The polyphenylene ether can have aminoalkyl-containing end group(s), typically located in a position ortho to the hydroxy group. As one example, Z¹ can be a di-n-butylaminomethyl group formed by reaction of a terminal 3,5-dimethyl-1,4-phenyl group with the di-n-butylamine component of an oxidative polymerization catalyst. Also frequently present are tetramethyldiphenoquinone (TMDQ) end groups, typically obtained from 2,6-dimethylphenol-containing reaction mixtures in which tetramethyldiphenoquinone by-product is present. The polyphenylene ether can be in the form of a homopolymer, a random copolymer, a graft copolymer, or a block copolymer, as well as a combination thereof. In an aspect, the polyphenylene ether is a homopolymer, preferably poly(2,6-dimethyl-1,4-phenylene ether).

In an aspect, the polyphenylene ether has an intrinsic viscosity of 0.1 to 1 deciliter per gram measured by Ubbelohde viscometer at 25°C in chloroform. Within this range, the polyphenylene ether intrinsic viscosity can be 0.1 to 0.8 deciliter per gram, or 0.2 to 0.6 deciliter per gram, or 0.3 to 0.5 deciliter per gram, or 0.4 to 0.5 deciliter per gram.

In a specific aspect, the polyphenylene ether is a poly(2,6-dimethyl-1,4-phenylene ether) having an intrinsic viscosity of 0.1 to 1 deciliter per gram, measured by Ubbelohde viscometer at 25°C in chloroform. Within this range, the polyphenylene ether can have an intrinsic viscosity of 0.1 to 0.8 deciliters per gram, or 0.2 to 0.6 deciliter per gram, or 0.3 to 0.5 deciliter per gram, or 0.4 to 0.5 deciliter per gram.

The polyphenylene ether is present in the composition in an amount of 20 to 70 weight percent, based on the total weight of the composition. Within this range, the polyphenylene ether can be present in an amount of 25 to 65 weight percent, or 30 to 60 weight percent, or 30 to 50 weight percent, or 35 to 45 weight percent.

In addition to the polyphenylene ether, the composition further comprises a polystyrene. Polystyrene comprises repeating units derived from styrene. The polystyrene can be a linear polystyrene or have a branched structure. The polystyrene can be atactic, syndiotactic, or isotactic. In an aspect, the polystyrene is atactic.

The styrene content of the polystyrene can be at least 90 weight percent, at least 95 weight percent, or at least 98 weight percent, each based on the total weight of the polystyrene. In an aspect, the styrene content can be 100 percent (i.e., the polystyrene can be a homopolystyrene). When the polystyrene comprises less than 100 weight percent of repeating units derived from styrene, it may be a random, block, or graft copolymer of styrene with at least one other copolymerizable monomer such as, for example, another alkenyl aromatic monomer (e.g., alpha-methylstyrene, para-methylstyrene, divinylbenzene), acrylonitrile, a conjugated diene (e.g., butadiene, isoprene), or maleic anhydride.

The polystyrene can have a melt volume flow rate of 1 to 35 grams per 10 minutes, or 1.5 to 30 grams per 10 minutes, or 1.5 to 20 grams per 10 minutes, or 1.5 to 10 grams per 10 minutes, or 1.5 to 5 grams per 10 minutes, each measured at 200°C and 5 kilogram load according to ISO 1133. The polystyrene can have a weight average molecular weight of 50,000 to 450,000 grams per mole, determined using gel permeation chromatography.

In an aspect, the polystyrene can be a polystyrene homopolymer (also referred to as "homopolystyrene"). As used herein, the term "homopolystyrene" refers to a homopolymer of styrene and can also be referred to as crystal polystyrene. Thus, the residue of any monomer other than styrene is excluded from the homopolystyrene. The homopolystyrene can be atactic, syndiotactic, or isotactic. In an aspect, the homopolystyrene is atactic. In an aspect, the homopolystyrene can have a melt volume flow rate of 1 to 5 grams per 10 minutes, measured at 200°C and 5 kilogram load according to ISO 1133.

The polystyrene is present in the composition in an amount of 20 to 60 weight percent, based on the total weight of the composition. Within this range, the polystyrene can be present in an amount of 25 to 65 weight percent, or 30 to 60 weight percent, or 30 to 50 weight percent, or 35 to 45 weight percent.

The composition further comprises a block copolymer of an alkenyl aromatic compound and a conjugated diene. For brevity, this component is referred to as the "block copolymer". The block copolymer can comprise 10 to 90 weight percent of poly(alkenyl aromatic) content and 90 to 10 weight percent of hydrogenated poly(conjugated diene) content, based on the weight of the block copolymer. In an aspect, the block copolymer is a low poly(alkenyl aromatic content) block copolymer in which the poly(alkenyl aromatic) content is 10 to less than 40 weight percent, specifically 20 to 35 weight percent, more specifically 25 to 35 weight percent, yet more specifically 30 to 35 weight percent, all based on the weight of the low poly(alkenyl aromatic) content block copolymer. In an aspect, the block copolymer is a high poly(alkenyl aromatic content) block copolymer in which the poly(alkenyl aromatic) content is 40 to 90 weight percent, specifically 50 to 80 weight percent, more specifically 60 to 70 weight percent, all based on the weight of the high poly(alkenyl aromatic content) block copolymer.

The block copolymer can have a weight average molecular weight of 40,000 to 400,000 grams per mole (g/mol). The number average molecular weight and the weight average molecular weight can be determined by gel permeation chromatography and based on comparison to polystyrene standards. In an aspect, the block copolymer has a weight average molecular weight of 200,000 to 400,000 g/mol, specifically 220,000 to 350,000 g/mol. In an aspect the block copolymer has a weight average molecular weight of 40,000 to 200,000 g/mol, specifically 40,000 to 180,000 g/mol, more specifically 40,000 to 150,000 g/mol.

The alkenyl aromatic monomer used to prepare the block copolymer can have the structure 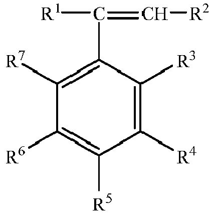 wherein R¹ and R² each independently represent a hydrogen atom, a C₁-₈ alkyl group, or a C₂-₈ alkenyl group; R³ and R⁷ each independently represent a hydrogen atom, a C₁-₈ alkyl group, a chlorine atom, or a bromine atom; and R⁴, R⁵, and R⁶ each independently represent a hydrogen atom, a C₁-₈ alkyl group, or a C₂-₈ alkenyl group, or R⁴ and R⁵ are taken together with the central aromatic ring to form a naphthyl group, or R⁵ and R⁶ are taken together with the central aromatic ring to form a naphthyl group. Specific alkenyl aromatic monomers include, for example, styrene, chlorostyrenes such as p-chlorostyrene, methylstyrenes such as alpha-methylstyrene and p-methylstyrene, and t-butylstyrenes such as 3-t-butylstyrene and 4-t-butylstyrene. In an aspect, the alkenyl aromatic monomer is styrene.

The conjugated diene used to prepare the block copolymer can be a C₄-₂₀ conjugated diene. Suitable conjugated dienes include, for example, 1,3-butadiene, 2-methyl-1,3-butadiene, 2-chloro-1,3-butadiene, 2,3-dimethyl-1,3-butadiene, 1,3-pentadiene, 1,3-hexadiene, and the like, and combinations thereof. In an aspect, the conjugated diene is 1,3-butadiene, 2-methyl-1,3-butadiene, or a combination thereof. In an aspect, the conjugated diene is 1,3-butadiene.

The block copolymer is a copolymer comprising (A) at least one block derived from an alkenyl aromatic compound and (B) at least one block derived from a conjugated diene. The block copolymer can be unhydrogenated or at least partially hydrogenated (referred to as a hydrogenated block copolymer). In the block copolymer is a hydrogenated block copolymer, the aliphatic unsaturated group content in the block (B) is at least partially reduced by hydrogenation. In an aspect, the aliphatic unsaturation in the (B) block is reduced by at least 50 percent, specifically at least 70 percent. In an aspect, the block copolymer is an unhydrogenated block copolymer, wherein the aliphatic unsaturated group content has not been reduced by hydrogenation.

The arrangement of blocks (A) and (B) includes a linear structure, a grafted structure, and a radial teleblock structure with or without a branched chain. Linear block copolymers include tapered linear structures and non-tapered linear structures. In an aspect, the block copolymer has a tapered linear structure. In an aspect, the block copolymer has a non-tapered linear structure. In an aspect, the block copolymer comprises a (B) block that comprises random incorporation of alkenyl aromatic monomer. Linear block copolymer structures include diblock (A-B block), triblock (A-B-A block or B-A-B block), tetrablock (A-B-A-B block), and pentablock (A-B-A-B-A block or B-A-B-A-B block) structures as well as linear structures containing 6 or more blocks in total of (A) and (B), wherein the molecular weight of each (A) block can be the same as or different from that of other (A) blocks, and the molecular weight of each (B) block can be the same as or different from that of other (B) blocks. In an aspect, the block copolymer is a diblock copolymer, a triblock copolymer, or a combination thereof.

In an aspect, the block copolymer excludes the residue of monomers other than the alkenyl aromatic compound and the conjugated diene. In an aspect, the block copolymer consists of blocks derived from the alkenyl aromatic compound and the conjugated diene. It does not comprise grafts formed from these or any other monomers. It also consists of carbon and hydrogen atoms and therefore excludes heteroatoms. In an aspect, the block copolymer includes the residue of one or more acid functionalizing agents, such as maleic anhydride. In an aspect, the block copolymer is a hydrogenated block copolymer and comprises a polystyrene-poly(ethylene-butylene)-polystyrene triblock copolymer In an aspect, the block copolymer is an unhydrogenated block copolymer and comprises a polystyrene-polybutadiene-polystyrene triblock copolymer.

Methods for preparing block copolymers are known in the art and many block copolymers are commercially available. Illustrative commercially available block copolymers include the polystyrene-poly(ethylene-propylene) diblock copolymers available from Kraton Performance Polymers Inc. as KRATON^{™} G1701 (having 37 weight percent polystyrene) and G1702 (having 28 weight percent polystyrene); the polystyrene-poly(ethylene-butylene)-polystyrene triblock copolymers available from Kraton Performance Polymers Inc.as KRATON^{™} G1641 (having 33 weight percent polystyrene), G1650 (having 30 weight percent polystyrene), G1651 (having 33 weight percent polystyrene), and G1654 (having 31 weight percent polystyrene); and the polystyrene-poly(ethylene-ethylene/propylene)-polystyrene triblock copolymers available from Kuraray as SEPTON^{™} S4044, S4055, S4077, and S4099. Additional commercially available block copolymers include polystyrene-poly(ethylenebutylene)-polystyrene (SEBS) triblock copolymers available from Dynasol as CALPRENE^{™} H6140 (having 31 weight percent polystyrene), H6170 (having 33 weight percent polystyrene), H6171 (having 33 weight percent polystyrene), and H6174 (having 33 weight percent polystyrene); and from Kuraray as SEPTON^{™} 8006 (having 33 weight percent polystyrene) and 8007 (having 30 weight percent polystyrene); polystyrene-poly(ethylene-butylene-styrene)-polystyrene tapered block copolymers available from Kraton Performance Polymers as KRATON^{™} A1535 (having 56.3-60.3 weight percent polystyrene) and A1536 (having 37-44 weight percent polystyrene); polystyrene-poly(ethylene-propylene)-polystyrene (SEPS) copolymers available from Kuraray as SEPTON^{™} 2006 (having 35 weight percent polystyrene) and 2007 (having 30 weight percent polystyrene); oil-extended compounds of these block copolymers available from Kraton Performance Polymers Inc. as KRATON^{™} G4609 (containing 45% mineral oil, and the SEBS having 33 weight percent polystyrene) and G4610 (containing 31% mineral oil, and the SEBS having 33 weight percent polystyrene); and from Asahi as TUFTEC^{™} H1272 (containing 36% oil, and the SEBS having 35 weight percent polystyrene); polystyrene-polybutadiene-polystyrene (SBS) copolymer available from Kraton Performance Polymers as KRATON^{™} D1101 (having 29-33 weight percent polystyrene); and polystyrene-polybutadiene (SBS) copolymer available from Kraton Performance Polymers as KRATON^{™} D0243 (having 26-31 weight percent polystyrene). Mixtures of two of more block copolymers can be used.

The block copolymer is present in the composition in an amount of 0.1 to 15 weight percent, based on the total weight of the composition. Within this range, the block copolymer can be present in an amount of 1 to 15 weight percent, or 1 to 10 weight percent.

The composition further comprises a flame retardant. Preferably, the flame retardant is non-halogenated. Thus, in an aspect, the composition can be essentially free of chlorine and bromine. "Essentially free of chlorine and bromine" is defined as having a bromine or chlorine content of less than or equal to 100 parts per million by weight (ppm), less than or equal to 75 ppm, or less than or equal to 50 ppm, based on the total parts by weight of the composition, excluding any filler.

There is no particular restriction on the types of flame retardants that may be used except that the flame retardant is suitably stable at the elevated temperatures employed during processing and free of chlorine and bromine. Exemplary flame retardants can include melamine (CAS No. 108-78-1), melamine cyanurate (CAS No. 37640-57-6), melamine phosphate (CAS No. 20208-95-1), melamine pyrophosphate (CAS No. 15541-60-3), melamine polyphosphate (CAS No. 218768-84-4), melam, melem, melon, zinc borate (CAS No. 1332-07-6), boron phosphate, red phosphorous (CAS No. 7723-14-0), organophosphate esters, monoammonium phosphate (CAS No. 7722-76-1), diammonium phosphate (CAS No. 7783-28-0), alkyl phosphonates (CAS No. 78-38-6 and 78-40-0), metal dialkyl phosphinate, ammonium polyphosphates (CAS No. 68333-79-9), low melting glasses and combinations of two or more of the foregoing flame retardants.

In an aspect, the composition comprises a flame retardant comprising an organophosphate ester, a metal dialkyl phosphinate, or a combination thereof.

Exemplary organophosphate ester flame retardants include, but are not limited to, phosphate esters comprising phenyl groups, substituted phenyl groups, or a combination of phenyl groups and substituted phenyl groups, bis-aryl phosphate esters based upon resorcinol such as, for example, resorcinol bis-diphenylphosphate, as well as those based upon bis-phenols such as, for example, bis-phenol A bis-diphenylphosphate. In an asepct, the organophosphate ester can comprise tris(alkylphenyl) phosphate (for example, CAS No. 89492-23-9 or CAS No. 78-33-1), resorcinol bis-diphenylphosphate (for example, CAS No. 57583-54-7), bis-phenol A bis-diphenylphosphate (for example, CAS No. 181028-79-5), triphenyl phosphate (for example, CAS No. 115-86-6), tris(isopropylphenyl) phosphate (for example, CAS No. 68937-41-7) and mixtures of two or more of the foregoing organophosphate esters.

In an aspect, the organophosphate ester comprises a bis-aryl phosphate of the following formula: 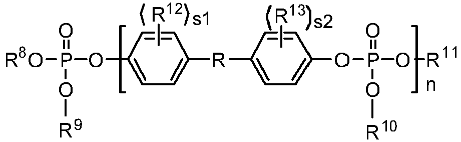 wherein R, R¹² and R¹³ are independently at each occurrence an alkyl group having 1 to 5 carbons and R⁸-R¹¹ are independently an alkyl, aryl, arylalkyl or alkylaryl group having 1 to 10 carbons; n is an integer equal to 1 to 25; and s1 and s2 are independently an integer equal to 0 to 2. In an aspect OR⁸, OR⁹, OR¹⁰ and OR¹¹ are independently derived from phenol, a monoalkylphenol, a dialkylphenol or a trialkylphenol.

As readily appreciated by one of ordinary skill in the art, the bis-aryl phosphate is derived from a bisphenol. Exemplary bisphenols include 2,2-bis(4-hydroxyphenyl)propane (so-called bisphenol A), 2,2-bis(4-hydroxy-3-methylphenyl)propane, bis(4-hydroxyphenyl)methane, bis(4-hydroxy-3,5-dimethylphenyl)methane and 1,1-bis(4-hydroxyphenyl)ethane. In an aspect, the bisphenol comprises bisphenol A.

In an aspect, the flame retardant comprises a metal dialkyl phosphinate. As used herein, the term "metal dialkyl phosphinate" refers to a salt comprising at least one metal cation and at least one dialkyl phosphinate anion. In an aspect, the metal dialkyl phosphinate has the formula: 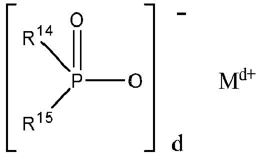 wherein R¹⁴ and R¹⁵ are each independently C₁-₆ alkyl; M is calcium, magnesium, aluminum, or zinc; and d is 2 or 3. Examples of R¹⁴ and R¹⁵ include methyl, ethyl, n-propyl, isopropyl, n-butyl, tert-butyl, n-pentyl, and phenyl. In an aspect, R¹⁴ and R¹⁵ are ethyl, M is aluminum, and d is 3 (that is, the metal dialkyl phosphinate is aluminum tris(diethyl phosphinate)).

In an aspect, the metal dialkyl phosphinate is in particulate form. The metal dialkyl phosphinate particles may have a median particle diameter (D50) less than or equal to 40 micrometers, or, more specifically, a D50 less than or equal to 30 micrometers, or, even more specifically, a D50 less than or equal to 25 micrometers. Additionally, the metal dialkyl phosphinate may be combined with a polymer, such as a poly(arylene ether), a polyolefin, a polyamide, a block copolymer, or combination thereof, to form a masterbatch. The metal dialkyl phosphinate masterbatch comprises the metal dialkyl phosphinate in an amount greater than is present in the thermoplastic composition. Employing a masterbatch for the addition of the metal dialkyl phosphinate to the other components of the thermoplastic composition can facilitate addition and improve distribution of the metal dialkyl phosphinate.

The flame retardant is present in the composition in an amount of 1 to 25 weight percent, based on the total weight of the composition. Within this range, the flame retardant can be present in an amount of 1 to 20 weight percent, or 1 to 16 weight percent, or 5 to 20 weight percent, or 5 to 16 weight percent.

In a specific aspect, the flame retardant comprises a combination of a metal dialkyl phosphinate and an organophosphate ester. For example, the composition can comprise 1 to 8 weight percent of the metal dialkylphosphinate and 5 to 15 weight percent of the organophosphate ester, wherein weight percent is based on the total weight of the composition.

In a specific aspect, the composition can comprise 35 to 45 weight percent of the polyphenylene ether; 35 to 45 weight percent of the polystyrene; 1 to 10 weight percent of the block copolymer of an alkenyl aromatic and a conjugated diene; and 5 to 16 weight percent of the flame retardant. The polyphenylene ether can be a poly(2,6-dimethyl-1,4-phenylene ether), preferably wherein the phenylene ether has an intrinsic viscosity of 0.1 to 1 deciliters per gram, or 0.1 to 0.8 deciliters per gram, as determined by Ubbelohde viscometer at 25°C in chloroform. The polystyrene can be a homopolystyrene. The block copolymer can be an unhydrogenated block copolymer and can comprise repeating units derived from styrene and butadiene. The flame retardant can comprise an organophosphate, a metal dialkylphosphinate, or a combination thereof.

The composition can optionally further comprise a compatibilizer, a chain extender, or a combination thereof.

As used herein, the term "compatibilizer" or "compatibilizing agent" refers to a polyfunctional compound that interacts with the other components of the composition, for example polyphenylene ether, the polystyrene, or both. This interaction can be chemical (for example, grafting) and/or physical (for example, affecting the surface characteristics of the dispersed phases). In either instance the resulting composition exhibits improved compatibility, particularly as evidenced, for example, by enhanced impact strength, mold knit line strength, and/or tensile elongation.

Examples of compatibilizing agents that can be employed include liquid diene polymers, epoxy compounds, oxidized polyolefin wax, quinones, organosilane compounds, polyfunctional compounds, functionalized poly(arylene ether)s, and combinations thereof. Compatibilizing agents are further described in U.S. Patent Nos. 5,132,365 to Gallucci, and 6,593,411 and 7,226,963 to Koevoets et al.

In an aspect, the compatibilizing agent comprises a polyfunctional compound. Polyfunctional compounds that can be employed as a compatibilizing agent are typically of three types. The first type of polyfunctional compound has in the molecule both (a) a carbon-carbon double bond or a carbon-carbon triple bond and (b) at least one carboxylic acid, anhydride, amide, ester, imide, amino, epoxy, orthoester, or hydroxy group. Examples of such polyfunctional compounds include maleic acid; maleic anhydride; fumaric acid; glycidyl acrylate, itaconic acid; aconitic acid; maleimide; maleic hydrazide; reaction products resulting from a diamine and maleic anhydride, maleic acid, fumaric acid, etc.; dichloro maleic anhydride; maleic acid amide; unsaturated dicarboxylic acids (for example, acrylic acid, butenoic acid, methacrylic acid, ethylacrylic acid, pentenoic acid, decenoic acids, undecenoic acids, dodecenoic acids, linoleic acid, etc.); esters, acid amides or anhydrides of the foregoing unsaturated carboxylic acids; unsaturated alcohols (for example, alkanols, crotyl alcohol, methyl vinyl carbinol, 4-pentene-1-ol, 1,4-hexadiene-3-ol, 3-butene-1,4-diol, 2,5-dimethyl-3-hexene-2,5-diol, and alcohols of the formula CₙH₂ₙ-5OH, CₙH₂ₙ-7OH and CₙH₂ₙ-9OH, wherein n is a positive integer less than or equal to 30); unsaturated amines resulting from replacing from replacing the -OH group(s) of the above unsaturated alcohols with -NH₂ group(s); functionalized diene polymers and copolymers; and combinations comprising one or more of the foregoing. In an aspect, the compatibilizing agent comprises maleic anhydride, fumaric acid, or a combination thereof.

The second type of polyfunctional compatibilizing agent has both (a) a group represented by the formula (OR) wherein R is hydrogen or an alkyl, aryl, acyl or carbonyl dioxy group and (b) at least two groups each of which can be the same or different selected from carboxylic acid, acid halide, anhydride, acid halide anhydride, ester, orthoester, amide, imido, amino, and various salts thereof. Typical of this group of compatibilizing agents are the aliphatic polycarboxylic acids, acid esters, and acid amides represented by the formula:

(R^{I}O)ₘR'(COOR^{II})ₙ(CONR^{III}R^{IV})ₛ

wherein R' is a linear or branched chain, saturated aliphatic hydrocarbon having 2 to 20, or, more specifically, 2 to 10, carbon atoms; R^{I} is hydrogen or an alkyl, aryl, acyl, or carbonyl dioxy group having 1 to 10, or, more specifically, 1 to 6, or, even more specifically, 1 to 4 carbon atoms; each R^{II} is independently hydrogen or an alkyl or aryl group having 1 to 20, or, more specifically, 1 to 10 carbon atoms; each R^{III} and R^{IV} are independently hydrogen or an alkyl or aryl group having 1 to 10, or, more specifically, 1 to 6, or, even more specifically, 1 to 4, carbon atoms; m is equal to 1 and (n + s) is greater than or equal to 2, or, more specifically, equal to 2 or 3, and n and s are each greater than or equal to zero and wherein (ORI) is alpha or beta to a carbonyl group and at least two carbonyl groups are separated by 2 to 6 carbon atoms. Obviously, R^{I}, R^{II}, R^{III}, and R^{IV} cannot be aryl when the respective substituent has less than 6 carbon atoms.

Suitable polycarboxylic acids include, for example, citric acid, malic acid, and agaricic acid, including the various commercial forms thereof, such as for example, the anhydrous and hydrated acids; and combinations comprising one or more of the foregoing. In an aspect, the compatibilizing agent comprises citric acid. Illustrative of esters useful herein include, for example, acetyl citrate, monostearyl and/or distearyl citrates, and the like. Suitable amides useful herein include, for example, N,N'-diethyl citric acid amide; N-phenyl citric acid amide; N-dodecyl citric acid amide; N,N'-didodecyl citric acid amide; and N dodecyl malic acid. Derivatives include the salts thereof, including the salts with amines and the alkali and alkaline metal salts. Examples of suitable salts include calcium malate, calcium citrate, potassium malate, and potassium citrate.

The third type of polyfunctional compatibilizing agent has in the molecule both (a) an acid halide group and (b) at least one carboxylic acid, anhydride, ester, epoxy, orthoester, or amide group, preferably a carboxylic acid or anhydride group. Examples of compatibilizing agents within this group include trimellitic anhydride acid chloride, chloroformyl succinic anhydride, chloroformyl succinic acid, chloroformyl glutaric anhydride, chloroformyl glutaric acid, chloroacetyl succinic anhydride, chloroacetylsuccinic acid, trimellitic acid chloride, and chloroacetyl glutaric acid. In an aspect, the compatibilizing agent comprises trimellitic anhydride acid chloride.

In a specific aspect, the compatibilizing agent can comprise maleic acid, maleic anhydride, citric acid, fumaric acid, or a combination thereof. In an aspect, the compatibilizing agent can comprise citric acid. Exemplary compatibilizers can include citric acid, fumaric acid, maleic anhydride, or a combination thereof.

The compatibilizing agent can be present in the composition in an amount of 0.2 to 1 weight percent, based on the total weight of the composition. Within this range, the compatibilizing agent can be present in an amount of 0.4 to 0.9 weight percent.

Exemplary chain extenders can include an epoxy compound. Epoxy compounds useful as additives include epoxy modified acrylic oligomers or polymers (such as a styrene-acrylate-epoxy polymer, prepared from for example a combination of: a substituted or unsubstituted styrene such as styrene or 4-methylstyrene; an acrylate or methacrylate ester of a C₁₋₂₂ alkyl alcohol such as methyl acrylate, methyl methacrylate, ethyl acrylate, butyl acrylate, or the like; and an epoxy-functionalized acrylate such as glycidyl acrylate, glycidyl methacrylate, 2-(3,4-epoxycyclohexyl)ethyl acrylate, 2-(3,4-epoxycyclohexyl)ethyl methacrylate, or the like), or an epoxy carboxylate oligomer based on cycloaliphatic epoxides (such as, for example, 3,4-epoxycyclohexylmethyl-3,4-epoxycyclohexylcarboxylate, or the like). Epoxy modified polyolefins can also be useful as chain extenders in the present composition, prepared from, for example, a combination of: an olefin such as ethylene; and an epoxy-functionalized acrylate such as glycidyl acrylate, glycidyl methacrylate, 2-(3,4-epoxycyclohexyl)ethyl acrylate, 2-(3,4-epoxycyclohexyl)ethyl methacrylate, or the like), or an epoxy carboxylate oligomer based on cycloaliphatic epoxides (such as, for example, 3,4-epoxycyclohexylmethyl-3,4-epoxycyclohexylcarboxylate, or the like). In a specific aspect, an epoxy modified polyolefin can be prepared from ethylene and glycidyl methacrylate.

In an aspect, the epoxy chain extender can comprise styrenic and acrylic groups, for example the epoxies described in US 2013/0131255 and US 6,984,694, or available under the trade names JONCRYL (e.g., JONCRYL ADR 4368 (a styrene-acrylate copolymer with epoxy functionality). Other epoxy hydrostabilizers include Joncryl ADR 4300 (epoxidized soybean oil).

Representative epoxy chain extenders can have a molecular weight of 2,500 to 8,500 grams per mole (g/mol), or 3,000 to 6,000 grams per mole. The epoxy chain extender can have an epoxy equivalent weight (EEW) of 180 to 2800 g/mol, or 190 to 1400 g/mol, or 200 to 700 g/mol.

The chain extender can be present in the composition in an amount of 0.1 to 5 weight percent, or 0.5 to 3 weight percent, or 0.5 to 2 weight percent, or 1 to 2 weight percent, each based on the total weight of the composition.

The composition can optionally further comprise one or more additives, provided that the additive(s) do not significantly adversely affect a desired property of the foamed composition. The additive composition or individual additives can be mixed at a suitable time during the mixing of the components for forming the composition. The additive composition can include flow modifier, filler (e.g., a particulate polytetrafluoroethylene (PTFE), glass, carbon, mineral, or metal), antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g., a dye or pigment), surface effect additive, radiation stabilizer, anti-drip agent (e.g., a PTFE-encapsulated styrene-acrylonitrile copolymer (TSAN)), or a combination thereof. The additives are used in the amounts generally known to be effective. For example, the total amount of the additive composition (other than any impact modifier, filler, or reinforcing agent) can be 0.001 to 10 weight percent, or 0.1 to 10 weight percent, or 0.01 to 5 weight percent, each based on the total weight of the polymer in the composition. In an aspect the composition can exclude additives not specifically disclosed herein.

In an aspect, the composition can comprise an acid scavenger, a metal deactivator, a stabilizer, a mold release agent, an anti-drip agent, or a combination thereof.

Acid scavengers generally comprise carboxylate, carbonate, and bicarbonate salts of alkali metal and alkaline earth metals. The carboxylate salts have the general formula M(COOR¹)ₙ, wherein "M" is an alkali metal or an alkaline earth metal; R¹ is a monovalent C₁₋₆ alkyl group; and "n" is 1 or 2. Examples of alkali metal and alkaline earth metal carboxylates include, but are not limited to, lithium acetate, sodium acetate, potassium acetate, lithium benzoate, sodium benzoate, potassium benzoate, lithium propionate, sodium propionate, calcium acetate, calcium propionate, calcium benzoate, and the like. Examples of alkali metal and alkaline earth metal carbonates and bicarbonates include, but are not limited to, lithium carbonate, sodium carbonate, potassium carbonate, lithium bicarbonate, sodium bicarbonate, potassium bicarbonate, and the like. Any combination of the acid scavengers can also be used.

Heat stabilizer additives include organophosphites (e.g., triphenyl phosphite, tris-(2,6-dimethylphenyl)phosphite, tris-(mixed mono-and di-nonylphenyl)phosphite or the like), phosphonates (e.g., dimethylbenzene phosphonate or the like), phosphates (e.g., trimethyl phosphate, or the like), or a combination thereof. The heat stabilizer can be tris(2,4-di-t-butylphenyl) phosphate available as IRGAPHOS 168. Heat stabilizers are generally used in amounts of 0.01 to 5 weight percent, based on the total weight of polymer in the composition.

Light stabilizers, in particular ultraviolet light (UV) absorbing additives, also referred to as UV stabilizers, include hydroxybenzophenones (e.g., 2-hydroxy-4-n-octoxy benzophenone), hydroxybenzotriazines, cyanoacrylates, oxanilides, benzoxazinones (e.g., 2,2'-(1,4-phenylene)bis(4H-3,1-benzoxazin-4-one, commercially available under the trade name CYASORB UV-3638 from Cytec), aryl salicylates, hydroxybenzotriazoles (e.g., 2-(2-hydroxy-5-methylphenyl)benzotriazole, 2-(2-hydroxy-5-tert-octylphenyl)benzotriazole, and 2-(2H-benzotriazol-2-yl)-4-(1,1,3,3-tetramethylbutyl)-phenol, commercially available under the trade name CYASORB 5411 from Cytec) or a combination thereof. The UV stabilizers can be present in an amount of 0.01 to 1 weight percent, preferably, 0.1 to 0.5 weight percent, and more preferably, 0.15 to 0.4 weight percent, based on the total weight of polymer in the composition.

There is considerable overlap among plasticizers, lubricants, and mold release agents, which include, for example, phthalic acid esters (e.g., octyl-4,5-epoxy-hexahydrophthalate), tris-(octoxycarbonylethyl)isocyanurate, di- or polyfunctional aromatic phosphates (e.g., resorcinol tetraphenyl diphosphate (RDP), the bis(diphenyl) phosphate of hydroquinone and the bis(diphenyl) phosphate of bisphenol A); poly-alpha-olefins; epoxidized soybean oil; silicones, including silicone oils (e.g., poly(dimethyl diphenyl siloxanes); fatty acid esters (e.g., C₁₋₃₂alkyl stearyl esters, such as methyl stearate and stearyl stearate and esters of stearic acid such as pentaerythritol tetrastearate, glycerol tristearate (GTS), and the like), waxes (e.g., beeswax, montan wax, paraffin wax, or the like), or a combination thereof. These are generally used in amounts of 0.01 to 5 weight percent, based on the total weight of the polymer in the composition.

Anti-drip agents can also be used in the composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. An TSAN comprises 50 weight percent PTFE and 50 weight percent SAN, based on the total weight of the encapsulated fluoropolymer. The SAN can comprise, for example, 75 weight percent styrene and 25 weight percent acrylonitrile based on the total weight of the copolymer. Anti-drip agents can be used in amounts of 0.1 to 10 weight percent, based on the total weight of the composition.

The relative amount of each component can be adjusted to provide the desired combination of properties guided by the present disclosure. As is understood by one of skill in the art, the amount of each component can be selected within the recited ranges such that they total 100 weight percent.

The composition can optionally exclude or minimize components not specifically described herein. In an aspect, the composition can exclude or minimize (e.g., include less than 5 weight percent, or less than 1 weight percent, or less than 0.1 weight percent) thermoplastic polymers other than the polyphenylene ether, the polystyrene, the block copolymer, and any polymeric chain extender. In an aspect the composition can exclude or minimize a rubber-modified polystyrene or a high impact polystyrene. In an aspect, the composition can minimize or exclude a coupling agent (e.g., a silane coupling agent, a titanate coupling agent, an aluminate coupling agent, or a combination thereof), a dispersant (e.g., a polyolefin-based hyperdispersant, a polyether-based hyperdispersant, a polyacrylate-based hyperdispersant, or a combination thereof) and deodorant (e.g., comprising hydrotalcite or silica), or a combination thereof.

The foamed composition in the form of an extruded foam sheet. For example, for example, the extruded foam sheet can be a continuous sheet. The foam sheet can have a width of, for example, 50 to 500 millimeters (mm), for example 100 to 300 mm, or 150 to 250 mm, and a thickness of 1 to 25 mm, for example 2 to 15 mm, or 5 to 10 mm.

The foamed composition can have an open cell content of less than or equal to 50%, for example, 0 to 50%, or 0 to 40%, or 0 to 30%, or 0 to 20%, or 0 to 10%, or 1 to 50%, or 1 to 40%, or 1 to 30%, or 1 to 20%, or 1 to 10%, or 5 to 50%, or 5 to 40%, or 5 to 30%, or 5 to 20%. Stated another way, the foamed composition can be a closed cell foam having a closed cell content or greater than 50%, for example greater than 50 to 100%, or 55 to 100%, or 60 to 100%, or 70 to 100%, or 75 to 100%, or 80 to 100%, or 90 to 100%.

The extruded foamed sheet is light weight and low density. For example, the extruded foamed sheet can have a density of less than 0.5 g/cm³, or 0.05 to 0.4 g/cm³, or 0.05 to 0.3 g/cm³, or 0.05 to 0.25 g/cm³, or 0.1 to 0.4 g/cm³, or 0.1 to 0.3 g/cm³, or 0.1 to 0.25 g/cm³, or 0.15 to 0.4 g/cm³, or 0.15 to 0.3 g/cm³, or 0.15 to 0.25 g/cm³.

The composition according to the present disclosure can exhibit a desirable combination of properties. For example, the composition can exhibit a density of 0.05 to 0.4 g/cm³, or 0.05 to 0.25 g/cm³. The composition can exhibit a UL94 rating of V0 or V1 at a thickness of 5 millimeters. The composition can exhibit a compressive strength of 1 to 5 MPa, or 1 to 4 MPa, or 1 to 3 MPa, or 1 to 2 MPa, determined according to ISO 844. In an aspect, the composition can exhibit a combination of the foregoing density, UL94 rating, and compressive strength. In an aspect, the composition can comprise two or the foregoing properties. In an aspect, the composition can comprise each of the foregoing properties.

The composition of the present disclosure can advantageously be made by an extrusion foaming process. Accordingly, a method of making a composition represents another aspect of the present disclosure.

The method composition melt mixing in an extruder the polyphenylene ether, the polystyrene, the block copolymer, and the flame retardant to provide a first mixture. The method further comprises introducing a blowing agent into the extruder (i.e., to contact the first mixture).

The term "blowing agent" is defined as a chemical agent that is used to foam a polymer. The blowing agent, also referred to herein as a foaming agent, can be a solid, a liquid, and/or a supercritical liquid. Suitable blowing agents that can be used include inorganic agents, organic agents and other chemical agents. Exemplary inorganic blowing agents include carbon dioxide, nitrogen, argon, water, air, nitrogen, and inert gases (such as helium and argon), as well as combinations comprising at least one of the foregoing. Exemplary organic agents include aliphatic hydrocarbons having 1-9 carbon atoms, aliphatic alcohols having 1-3 carbon atoms, and fully and partially halogenated aliphatic hydrocarbons having 1-4 carbon atoms. Aliphatic hydrocarbons include methane, ethane, propane, n-butane, isobutane, n-pentane, isopentane, neopentane, and the like. Aliphatic alcohols include methanol, ethanol, n-propanol, and isopropanol. Fully and partially halogenated aliphatic hydrocarbons include fluorocarbons, chlorocarbons, and chlorofluorocarbons. Examples of fluorocarbons include methyl fluoride, perfluoromethane, ethyl fluoride, 1,1-difluoroethane (HFC-152a), 1,1,1-trifluoroethane (HFC-143a), 1,1,1,2-tetrafluoro-ethane (HFC-134a), pentafluoroethane, difluoromethane, perfluoroethane, 2,2-difluoropropane, 1,1,1-trifluoropropane, perfluoropropane, dichloropropane, difluoropropane, perfluorobutane, perfluorocyclobutane, and so forth. Partially halogenated chlorocarbons and chlorofluorocarbons include methyl chloride, methylene chloride, ethyl chloride, 1,1,1-trichloroethane, 1,1-dichloro-1-fluoroethane (HCFC-141b), 1-chloro-1,1-difluoroethane (HCFC-142b), chlorodifluoromethane (HCFC-22), 1,1-dichloro-2,2,2-trifluoroethane (HCFC-123), 1-chloro-1,2,2,2-tetrafluoroethane (HCFC-124), and the like. Fully halogenated chlorofluorocarbons include trichloromonofluoromethane (CFC-11), dichlorodifluoromethane (CFC-12), trichlorotrifluoroethane (CFC-113), 1,1,1-trifluoroethane, pentafluoroethane, dichlorotetrafluoroethane (CFC-114), chloroheptafluoropropane, and dichlorohexafluoropropane. Other chemical agents include azodicarbonamide, azodiisobutyronitrile, benzenesulfonhydrazide, 4,4-oxybenzene sulfonyl-semicarbazide, p-toluene sulfonyl semi-carbazide, barium azodicarboxylate, N,N'-dimethyl-N,N'-dinitrosoterephthalamide, trihydrazino triazine, and so forth. In an aspect, the blowing agent can be carbon dioxide, air, nitrogen, argon, gaseous hydrocarbons, and combinations comprising at least one of the foregoing.

In an aspect, the blowing agent comprises carbon dioxide. The blowing agent can be solid carbon dioxide, liquid carbon dioxide, gaseous carbon dioxide, or supercritical carbon dioxide. Any of the inert gases, such as for example, helium, xenon, and argon can also be used. Non-limiting examples of gaseous hydrocarbons include methane, ethane, propane, and butane.

An auxiliary blowing agent can optionally be used in combination with the blowing agent. Exemplary auxiliary blowing agents can include, for example, a fluorine-containing foaming agent (e.g., a fluorinated hydrocarbon). In an aspect, the auxiliary blowing agent can comprise conventional halogenated hydrocarbons, e.g., fluorocarbon blowing agents. The preferred hydrocarbon auxiliary blowing agents can include fluorocarbon blowing agents and include trichlorofluoromethane (CCl₃F), dichlorodifluoromethane (CCl₂F₂) and dichlorotetrafluoroethane (CClF₂CClF₂). These are commercially available as FREON 11, FREON 12 and FREON 114. Other halogenated hydrocarbon blowing agents can include methylene chloride, chloroform, carbon tetrachloride (CCl₄), HCFC's, such as difluorochloromethane (CHClF₂), (HCFC-22), (FORCMACEL S), dichlorotrifluoroethane (CHCl₂CF₃), (HCFC-123), dichlorotrifluoroethane (CHFClCClF₂), (HCFC-123A), chlorotetrafluoroethane (CHClFCF₃), (HCFC-124), tetrafluoroethane (CH₂FCF₃), (HFC-134A), dichlorofluoroethane (CCl₂FCH₃) , (HCFC-141B), chlorodifluoroethane (CH₃CClF₂), (HCFC-142B), difluoroethane (CH₃CHF₂), (HFC-152A) and the like.

When an auxiliary blowing agent is present, it can be included at a weight ratio of blowing agent to auxiliary blowing agent of 1:0.1 to 1:0.5, or 1:0.1 to 1:0.3, or 1:0.2 to 1:0.3.

The blowing agent is introduced to the extruded in an amount effective to provide a total amount of less than 0.8 weight percent of blowing agent (including any auxiliary blowing agent), wherein weight percent of the blowing agent is based on the total weight of the polyphenylene ether, the polystyrene, the block copolymer, and the flame retardant. For example, the blowing agent can be introduced in an amount effective to provide a total amount of 0.2 to 0.76 weight percent of blowing agent based on the total weight of the polyphenylene ether, the polystyrene, the block copolymer, and the flame retardant.

The blowing agent is mixed with the first mixture in the extruder to provide a second mixture. The method further comprises cooling the second mixture. In an aspect, cooling of the second mixture can be in a second extruder downstream of the first extruder. The second mixture is foamed through a die at the outlet of the extruder (or when present, the second extruder) to provide the foamed composition.

In an aspect, the temperature at the outlet of the extruder (or when present, the second extruder) is less than 170°C, or less than or equal to 160°C, or 130 to 160°C. The present inventors have found that such outlet temperatures can provide a desirable combination of properties for the polyphenylene ether foamed compositions according to the present disclosure.

The composition described herein can be useful in a variety of articles. An article comprising the foamed composition therefore represents another aspect of the present disclosure. Exemplary articles can include extruded foam sheets, foam insulation boards, building materials, an electric vehicle battery component, an electrical box component, an automotive component, or insulation for wire or cable.

This disclosure is further illustrated by the following examples, which are non-limiting.

### EXAMPLES

Materials used for the following examples are described in Table 1.

**Table 1**

| Component | Description | Product supplier |
|---|---|---|
| PPE | Poly(2,6-dimethyl-1,4-phenylene ether), CAS Reg. No. 25134-01-4, having an intrinsic viscosity of 0.46 deciliter/gram, determined at 25 °C in chloroform by Ubbelohde viscometer. | SABIC |
| GPPS | General purpose polystyrene, CAS Reg. No. 9003-53-6, obtained as STYROLUTION PS 1050 | INEOS |
| HIPS | High impact polystyrene, CAS Reg. No. 9003-55-8, obtained as ET60 | Idemitsu |
| SBS | Linear triblock copolymer based on styrene and butadiene, having a polystyrene content of 31 wt%, CAS. Reg. No. 9003-55-8, obtained as D1101 | Kraton |
| BPADP | Bisphenol A bis(diphenyl phosphate), CAS Reg. No. 181028-79-5, obtained as CR741 | Daihachi Chemical |
| RDP | Resorcinol bis(diphenyl phosphate), CAS Reg. No. 57583-54-7, obtained as FYROLFLEX | ICL |
| DEPAL | Aluminium diethylphosphinate, CAS Reg. No. 225789-38-8, obtained as EXOLIT OP1230 | Clariant |
| Epoxy | Epoxide-containing copolymer having repeating units derived from styrene, acrylic acid ester and / or methacrylic acid ester, obtained as JONCRYL ADR4468 | BASF |
| CA | Citric acid, CAS. Reg. No. 77-92-9 | Jungbunzlauer |
| CO₂ | Carbon dioxide | - |
| LBA | Trans- 1-chloro-3,3,3- trifluoropropene, obtained as SOLSTICE (HFO-1234zd(E)) | Honeywell |

Foamed samples were prepared according to the procedures described below.

### Example 1

The first twin-screw extruder had the barrel temperature, from the feeding port to the melt pump, set to 220 °C, 230 °C, 240 °C, 260 °C, 265 °C, 260 °C, 255 °C, 255 °C, 250 °C, 245 °C, respectively. The temperature of the melt pump was set to 250 °C. The second extruder from the feeding port to the extrusion die was set to 250 °C, 245 °C, 240 °C, 240 °C, 235 °C, 235 °C and 230 °C, respectively.

The components were fed into the feeding port of the first extruder, and the materials were compounded in a twin-screw extruder, via melt pump and the single screw extruder, extruded from the die.

Foaming agents supercritical CO₂ and LBA in a 4:1 ratio and a 0.15 kg/h feeding speed, were injected into the first extruder by syringe pump. The melt pump and the second extruder gradually cooled down, until the end temperature of single extruder was reduced to 143 °C and the pressure between the two extruders was 22 MPa. The foamed PPO sheet was produced from the die. The foamed sheet was cut into the testing samples for density, flame retardant and compression test.

### Example 2

The first twin-screw extruder had a barrel temperature, from the feeding port to the melt pump, set to 220 °C, 230 °C, 240 °C, 260 °C, 265 °C, 260 °C, 255 °C, 255 °C, 250 °C, 245 °C, respectively. The temperature of the melt pump was set to 250 °C. The second extruder from the feeding port to the extrusion die was set to 250 °C, 245 °C, 240 °C, 240 °C, 235 °C, 235 °C and 230 °C, respectively.

The components were fed into the feeding port of the first extruder, and the materials were compounded in a twin-screw extruder, via melt pump and the single screw extruder, extruded from the die.

Supercritical CO₂ foaming agent was injected to the extruder at a 0.16 kg/h feeding speed by syringe pump. The melt pump and the second extruder gradually cooled down, until the end temperature of single extruder was reduced to 160°C and the pressure between the two extruders was 30 MPa. The foamed PPO sheet was produced from the die. The foamed sheet was cut into the testing samples for density, flame retardant and compression test.

### Example 3

The first twin-screw extruder had a barrel temperature, from the feeding port to the melt pump, set to 220 °C, 230 °C, 240 °C, 260 °C, 265 °C, 260 °C, 255 °C, 255 °C, 250 °C, 245 °C, respectively. The temperature of the melt pump was set to 250 °C. The second extruder from the feeding port to the extrusion die was set to 250 °C, 245 °C, 240 °C, 240 °C, 235 °C, 235 °C and 230 °C, respectively.

The components were fed into the feeding port of the first extruder, and the materials were compounded in a twin-screw extruder, via melt pump and the single screw extruder, extruded from the die.

Supercritical CO₂ foaming agent was injected to the extruder at a 0.15 kg/h feeding speed by syringe pump. The melt pump and the second extruder gradually cooled down, until the end temperature of single extruder was reduced to 152 °C and the pressure between the two extruders was 25 MPa. The foamed PPO sheet was produced from the die. The foamed sheet was cut into the testing samples for density, flame retardant and compression test.

### Example 4

The first twin-screw extruder had a barrel temperature, from the feeding port to the melt pump, set to 220 °C, 230 °C, 240 °C, 260 °C, 265 °C, 260 °C, 255 °C, 255 °C, 250 °C, 245 °C, respectively. The temperature of the melt pump was set to 250 °C. The second extruder from the feeding port to the extrusion die was set to 250 °C, 245 °C, 240 °C, 240 °C, 235 °C, 235 °C and 230 °C, respectively.

The components were fed into the feeding port of the first extruder, and the materials were compounded in a twin-screw extruder, via melt pump and the single screw extruder, extruded from the die.

Supercritical CO₂ foaming agent was injected to the extruder at a 0.12 kg/h feeding speed by syringe pump. The melt pump and the second extruder gradually cooled down, until the end temperature of single extruder was reduced to 145 °C and the pressure between the two extruders was 23 MPa. The foamed PPO sheet was produced from the die. The foamed sheet was cut into the testing samples for density, flame retardant and compression test.

### Comparative Example 1

The first twin-screw extruder had a barrel temperature, from the feeding port to the melt pump, set to 220 °C, 230 °C, 240 °C, 260 °C, 265 °C, 260 °C, 255 °C, 255 °C, 250 °C, 245 °C, respectively. The temperature of the melt pump was set to 250 °C. The second extruder from the feeding port to the extrusion die was set to 250 °C, 245 °C, 240 °C, 240 °C, 235 °C, 235 °C and 230 °C, respectively.

The components were fed into the feeding port of the first extruder, and the materials were compounded in a twin-screw extruder, via melt pump and the single screw extruder, extruded from the die.

Foaming agents supercritical CO₂ and LBA in a 4:1 ratio and a 0.15 kg/h feeding speed, were injected into the first extruder by syringe pump. The melt pump and the second extruder gradually cooled down, until the end temperature of single extruder was reduced to 143 °C and the pressure between the two extruders was 22 MPa. The foamed PPO sheet was produced from the die. The foamed sheet was cut into the testing samples for density, flame retardant and compression test.

### Comparative Example 2

The first twin-screw extruder had a barrel temperature, from the feeding port to the melt pump, set to 220 °C, 230 °C, 240 °C, 260 °C, 265 °C, 260 °C, 255 °C, 255 °C, 250 °C, 245 °C, respectively. The temperature of the melt pump was set to 250 °C. The second extruder from the feeding port to the extrusion die was set to 250 °C, 245 °C, 240 °C, 240 °C, 235 °C, 235 °C and 230 °C, respectively.

The components were fed into the feeding port of the first extruder, and the materials were compounded in a twin-screw extruder, via melt pump and the single screw extruder, extruded from the die.

Foaming agents supercritical CO₂ and LBA in a 4:1 ratio and a 0.15 kg/h feeding speed, were injected into the first extruder by syringe pump. The melt pump and the second extruder gradually cooled down, until the end temperature of single extruder was reduced to 160 °C and the pressure between the two extruders was 25 MPa. The foamed PPO sheet was produced from the die. The foamed sheet was cut into the testing samples for density, flame retardant and compression test.

### Comparative Example 3

The first twin-screw extruder had a barrel temperature, from the feeding port to the melt pump, set to 220 °C, 230 °C, 240 °C, 260 °C, 265 °C, 260 °C, 255 °C, 255 °C, 250 °C, 245 °C, respectively. The temperature of the melt pump was set to 250 °C. The second extruder from the feeding port to the extrusion die was set to 250 °C, 245 °C, 240 °C, 240 °C, 235 °C, 235 °C and 230 °C, respectively.

The components were fed into the feeding port of the first extruder, and the materials were compounded in a twin-screw extruder, via melt pump and the single screw extruder, extruded from the die.

Supercritical CO₂ foaming agent was injected to the extruder at a 0.2 kg/h feeding speed by syringe pump. The melt pump and the second extruder gradually cooled down, until the end temperature of single extruder was reduced to 142 °C and the pressure between the two extruders was 21 MPa. The foamed PPO sheet was produced from the die. The foamed sheet was cut into the testing samples for density, flame retardant and compression test.

### Comparative Example 4

The first twin-screw extruder had a barrel temperature, from the feeding port to the melt pump, set to 220 °C, 230 °C, 240 °C, 260 °C, 265 °C, 260 °C, 255 °C, 255 °C, 250 °C, 245 °C, respectively. The temperature of the melt pump was set to 250 °C. The second extruder from the feeding port to the extrusion die was set to 250 °C, 245 °C, 240 °C, 240 °C, 235 °C, 235 °C and 230 °C, respectively.

The components were fed into the feeding port of the first extruder, and the materials were compounded in a twin-screw extruder, via melt pump and the single screw extruder, extruded from the die.

Foaming agents supercritical CO₂ and LBA in a 4:1 ratio and a 0.15 kg/h feeding speed, were injected into the first extruder by syringe pump. The melt pump and the second extruder gradually cooled down, until the end temperature of single extruder was reduced to 162 °C and the pressure between the two extruders was 28 MPa. The foamed PPO sheet was produced from the die. The foamed sheet was cut into the testing samples for density, flame retardant and compression test.

### Comparative Example 5

The first twin-screw extruder had a barrel temperature, from the feeding port to the melt pump, set to 220 °C, 230 °C, 240 °C, 260 °C, 265 °C, 260 °C, 255 °C, 255 °C, 250 °C, 245 °C, respectively. The temperature of the melt pump was set to 250 °C. The second extruder from the feeding port to the extrusion die was set to 250 °C, 245 °C, 240 °C, 240 °C, 235 °C, 235 °C and 230 °C, respectively.

The components were fed into the feeding port of the first extruder, and the materials were compounded in a twin-screw extruder, via melt pump and the single screw extruder, extruded from the die.

Supercritical CO₂ foaming agent was injected to the extruder at a 0.15 kg/h feeding speed by syringe pump. The melt pump and the second extruder gradually cooled down, until the end temperature of single extruder was reduced to 142 °C and the pressure between the two extruders was 23 MPa. The foamed PPO sheet was produced from the die. The foamed sheet was cut into the testing samples for density, flame retardant and compression testing.

Compositions and processing parameters for each example are summarized in Table 2. The amount of each component is provided in weight percent (wt%) based on the total weight of the composition, except for the foaming agent content which is provided in weight percent based on the total weight of the polyphenylene ether, the polystyrene, the block copolymer, the flame retardant, and any additives (i.e., epoxy, compatibilizer, acid scavengers, metal deactivators, stabilizers, mold release agents, anti-drip agent, etc.).

Table 2 also shows the results of performance testing for each example. Compression testing was performed on 50x50x15 millimeter plaques, in accordance with ISO 844, with results reported in megapascals (MPa). Density was measure according to ISO 1183 and is reported in units of g/cm³. Flame testing was conducted on 125x13x5 mm test bars according to UL 94 testing standards.

**Table 2**

| Composition | Units | CE1 | CE2 | CE3 | CE4 | CE5 | E1 | E2 | E3 | E4 |
|---|---|---|---|---|---|---|---|---|---|---|
| PPE | wt% | 40.1 | 50.4 | 40.1 | 40.1 | 40.1 | 40.1 | 39.2 | 40.1 | 40.1 |
| GPPS | wt% | | | 41.8 | 41.8 | | 41.8 | 40.4 | 41.8 | 41.8 |
| HIPS | wt% | 41.8 | 28.5 | | | 41.8 | | | | |
| SBS | wt% | 1.7 | 2.4 | 1.7 | 1.7 | 1.7 | 1.7 | 7.8 | 1.7 | 1.7 |
| BPADP | wt% | 15.8 | | 11.8 | 4 | 15.8 | 11.8 | 9.8 | 11.8 | 11.8 |
| RDP | wt% | | 16.7 | | | | | | | |
| DEPAL | wt% | | | 4 | 11.8 | | 4 | | 4 | 4 |
| CA | wt% | | | | | | | 0.7 | | |
| Epoxy | wt% | | | | | | | 1.5 | | |
| Additives¹ | wt% | 0.6 | 2 | 0.6 | 0.6 | 0.6 | 0.6 | 0.6 | 0.6 | 0.6 |
| Processing Conditions | | | | | | | | | | |
| Foaming agent ratio | CO₂/LB A | 4:1 | 4:1 | 5:0 | 4:1 | 5:0 | 4:1 | 5:0 | 5:0 | 5:0 |
| Pressure between extruders | MPa | 22 | 25 | 21 | 28 | 23 | 22 | 30 | 25 | 23 |
| Temperature at the end of the second extruder | °C | 143 | 160 | 142 | 162 | 142 | 143 | 160 | 152 | 145 |
| Material feeding rate | kg/h | 25 | 25 | 25 | 25 | 25 | 25 | 28 | 30 | 25 |
| Foaming agent feeding rate | kg/h | 0.15 | 0.15 | 0.2 | 0.15 | 0.15 | 0.15 | 0.16 | 0.15 | 0.12 |
| Foaming agent content | wt% | 0.6 % | 0.6 % | 0.8 % | 0.6 % | 0.6 % | 0.6 % | 0.57 % | 0.5 % | 0.48 % |
| Properties | | | | | | | | | | |
| Density | g/cm³ | 1.01 | 0.86 | 0.79 | 0.91 | 0.95 | 0.18 | 0.21 | 0.22 | 0.19 |
| UL 94 rating (5mm) | | NA | NA | NA | NA | NA | V0 | V1 | V0 | V0 |
| Compressive Strength | MPa | NA | NA | NA | NA | NA | 1.35 | 1.40 | 1.43 | 1.38 |
| Foamed | | No | No | No | No | No | Yes | Yes | Yes | Yes |

| | | | | | | | | | | |
|---|---|---|---|---|---|---|---|---|---|---|
| ¹ One or more of acid scavengers, metal deactivators, stabilizers, mold release agents, anti-drip agent | | | | | | | | | | |

As shown in Table 2, particular compositions according to the present disclosure could desirably provide polyphenylene ether foams by extrusion. The foamed materials were of low density (e.g., less than 0.25 g/cm³), exhibited compressive strengths in the range of 1.35 to 1.45 MPa, and further achieved V0 or V1 flame retardance ratings according to UL 94. In contrast, compositions according to the comparative examples could not be foamed. Rather, higher density materials (e.g., in the range of 0.79 to 1.01 g/cm³) were obtained. Comparative examples 1, 2, and 5 each incorporated high impact polystyrene (i.e., a rubber modified polystyrene). The composition of comparative example 3 utilized a higher foaming agent content. Comparative example 4 was subjected to an increased temperature at the end of the second extruder (i.e., 162°C). Accordingly, the comparative examples and the examples according to the present disclosure show that particular compositions and processing conditions are needed to provide the desired low density foamed compositions having the particular combination of good compressive strength and flame retardance. A significant improvement is therefore provided by the present disclosure.

This disclosure further encompasses the following aspects, which are non-limiting.

Aspect 1: A composition comprising: 20 to 70 weight percent of a polyphenylene ether; 20 to 60 weight percent of a polystyrene; 0.1 to 15 weight percent of a block copolymer of an alkenyl aromatic and a conjugated diene; and 1 to 25 weight percent of a flame retardant; wherein weight percent of each component is based on the total weight of the composition; and wherein the composition, after foaming with a blowing agent, has a density of less than 0.5 g/cm³, or 0.05 to 0.4 g/cm³.

Aspect 2: The composition of aspect 1, wherein the composition is made by a method comprising: melt mixing in an extruder the polyphenylene ether, the polystyrene, the block copolymer, and the flame retardant to provide a first mixture; introducing a blowing agent into the extruder; mixing the blowing agent and the mixture in the extruder to provide a second mixture; cooling the second mixture, optionally in a second extruder; and foaming the second mixture through a die to provide the composition.

Aspect 3: The composition of aspect 2, wherein the blowing agent is a physical blowing agent, preferably comprising carbon dioxide optionally in combination with an auxiliary foaming agent, preferably wherein the auxiliary foaming agent comprises a fluorine-containing foaming agent.

Aspect 4: The composition of any of aspects 1 to 3, wherein the polyphenylene ether is a poly(2,6-dimethyl-1,4-phenylene ether), preferably wherein the phenylene ether has an intrinsic viscosity of 0.1 to 1 deciliters per gram, or 0.1 to 0.8 deciliters per gram, as determined by Ubbelohde viscometer at 25°C in chloroform.

Aspect 5: The composition of any of aspects 1 to 4, wherein high impact polystyrene is excluded from the composition.

Aspect 6: The composition of any of aspects 1 to 5, wherein the block copolymer is an unhydrogenated block copolymer, preferably comprising a styrene-butadiene-styrene triblock copolymer.

Aspect 7: The composition of any of aspects 1 to 6, wherein the flame retardant comprises an organophosphate, a metal dialkylphosphinate, or a combination thereof, preferably wherein the flame retardant comprises 1 to 8 weight percent of a metal dialkylphosphinate, and 5 to 15 weight percent of an organophosphate ester; each on the total weight of the foamed composition.

Aspect 8: The composition of any of aspects 1 to 7, further comprising a compatibilizer, a chain extender, or a combination thereof, preferably wherein the compatibilizer comprises citric acid, fumaric acid, maleic anhydride, or a combination thereof; and preferably wherein the chain extender comprises an epoxy compound.

Aspect 9: The composition of any of aspects 1 to 8, comprising: 35 to 45 weight percent of the polyphenylene ether; 35 to 45 weight percent of the polystyrene; 1 to 10 weight percent of the block copolymer of an alkenyl aromatic and a conjugated diene; and 5 to 16 weight percent of the flame retardant.

Aspect 10: The composition of any of aspects 1 to 9, having one or more of: a density of 0.05 to 0.4 g/cm³, or 0.05 to 0.25 g/cm³, or 0.1 to 0.24 g/cm³; a UL94 rating of V0 or V1 at a thickness of 5 millimeters; or a compressive strength of 1 to 5 MPa, determined according to ISO 844.

Aspect 11: A method of making a composition, the method comprising: melt mixing in an extruder 20 to 70 weight percent of a polyphenylene ether; 20 to 60 weight percent of a polystyrene; 0.1 to 15 weight percent of a block copolymer of an alkenyl aromatic and a conjugated diene; and 1 to 25 weight percent of a flame retardant; to provide a first mixture, wherein weight percent of each component is based on the total weight of the first mixture; introducing a blowing agent into the extruder; mixing the blowing agent and the mixture in the extruder to provide a second mixture; cooling the second mixture, optionally in a second extruder; and foaming the second mixture through a die to provide the composition having a density of less than 0.5 g/cm³, or 0.05 to 0.4 g/cm³.

Aspect 12: The method of aspect 11, wherein the blowing agent is a physical blowing agent, preferably comprising carbon dioxide, preferably comprising carbon dioxide optionally in combination with an auxiliary foaming agent, preferably wherein the auxiliary foaming agent comprises a fluorine-containing foaming agent.

Aspect 13: The method of aspect 11 or 12, wherein a temperature at the end of the second extruder, is less than 170°C, preferably less than or equal to 160°C, or 130 to 160°C.

Aspect 14: The method of any of aspects 11 to 13, wherein the blowing agent is introduced in an amount effective to provide a total amount of less than 0.8 weight percent, or 0.2 to 0.76 weight percent of blowing agent, wherein weight percent of the blowing agent is based on the total weight of the polyphenylene ether, the polystyrene, the block copolymer, and the flame retardant.

Aspect 15: An article comprising the composition of any of aspects 1 to 10, preferably wherein the article is an extruded foam sheet.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other. "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "an aspect" means that a particular element described in connection with the aspect is included in at least one aspect described herein, and may or may not be present in other aspects. The term "combination thereof' as used herein includes one or more of the listed elements, and is open, allowing the presence of one or more like elements not named. In addition, it is to be understood that the described elements may be combined in any suitable manner in the various aspects.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. The term "alkyl" means a branched or straight chain, saturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo atoms (e.g., bromo and fluoro), or only chloro atoms can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl), a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A composition comprising:
20 to 70 weight percent of a polyphenylene ether;
20 to 60 weight percent of a polystyrene;
0.1 to 15 weight percent of a block copolymer of an alkenyl aromatic and a conjugated diene; and
1 to 25 weight percent of a flame retardant;
wherein weight percent of each component is based on the total weight of the composition; and
wherein the composition, after foaming with a blowing agent, has a density of less than 0.5 g/cm³, or 0.05 to 0.4 g/cm³.

2. The composition of claim 1, wherein the composition is made by a method comprising:
melt mixing in an extruder the polyphenylene ether, the polystyrene, the block copolymer, and the flame retardant to provide a first mixture;
introducing a blowing agent into the extruder;
mixing the blowing agent and the mixture in the extruder to provide a second mixture;
cooling the second mixture, optionally in a second extruder; and
foaming the second mixture through a die to provide the composition having a density of less than 0.5 g/cm³, or 0.05 to 0.4 g/cm³.

3. The composition of claim 2, wherein the blowing agent is a physical blowing agent, preferably comprising carbon dioxide optionally in combination with an auxiliary foaming agent, preferably wherein the auxiliary foaming agent comprises a fluorine-containing foaming agent.

4. The composition of any of claims 1 to 3, wherein the polyphenylene ether is a poly(2,6-dimethyl-1,4-phenylene ether), preferably wherein the phenylene ether has an intrinsic viscosity of 0.1 to 1 deciliters per gram, or 0.1 to 0.8 deciliters per gram, as determined by Ubbelohde viscometer at 25°C in chloroform.

5. The composition of any of claims 1 to 4, wherein high impact polystyrene is excluded from the composition.

6. The composition of any of claims 1 to 5, wherein the block copolymer is an unhydrogenated block copolymer, preferably comprising a styrene-butadiene-styrene triblock copolymer.

7. The composition of any of claims 1 to 6, wherein the flame retardant comprises an organophosphate, a metal dialkylphosphinate, or a combination thereof, preferably wherein the flame retardant comprises:
1 to 8 weight percent of a metal dialkylphosphinate, and
5 to 15 weight percent of an organophosphate ester;
each on the total weight of the foamed composition.

8. The composition of any of claims 1 to 7, further comprising a compatibilizer, a chain extender, or a combination thereof,
preferably wherein the compatibilizer comprises citric acid, fumaric acid, maleic anhydride, or a combination thereof; and
preferably wherein the chain extender comprises an epoxy compound.

9. The composition of any of claims 1 to 8, comprising:
35 to 45 weight percent of the polyphenylene ether;
35 to 45 weight percent of the polystyrene;
1 to 10 weight percent of the block copolymer of an alkenyl aromatic and a conjugated diene; and
5 to 16 weight percent of the flame retardant.

10. The composition of any of claims 1 to 9, having one or more of:
a density of 0.05 to 0.4 g/cm³, or 0.05 to 0.25 g/cm³, or 0.1 to 0.24 g/cm³;
a UL94 rating of V0 or V1 at a thickness of 5 millimeters; or
a compressive strength of 1 to 5 MPa, determined according to ISO 844.

11. A method of making a composition, the method comprising:
melt mixing in an extruder
20 to 70 weight percent of a polyphenylene ether;
20 to 60 weight percent of a polystyrene;
0.1 to 15 weight percent of a block copolymer of an alkenyl aromatic and a conjugated diene; and
1 to 25 weight percent of a flame retardant;
to provide a first mixture, wherein weight percent of each component is based on the total weight of the first mixture;
introducing a blowing agent into the extruder;
mixing the blowing agent and the mixture in the extruder to provide a second mixture;
cooling the second mixture, optionally in a second extruder; and
foaming the second mixture through a die to provide the composition having a density of less than 0.5 g/cm³, or 0.05 to 0.4 g/cm³.

12. The method of claim 11, wherein the blowing agent is a physical blowing agent, preferably comprising carbon dioxide, preferably comprising carbon dioxide optionally in combination with an auxiliary foaming agent, preferably wherein the auxiliary foaming agent comprises a fluorine-containing foaming agent.

13. The method of claim 11 or 12, wherein a temperature at the end of the second extruder, is less than 170°C, preferably less than or equal to 160°C, or 130 to 160°C.

14. The method of any of claims 11 to 13, wherein the blowing agent is introduced in an amount effective to provide a total amount of less than 0.8 weight percent, or 0.2 to 0.76 weight percent of blowing agent, wherein weight percent of the blowing agent is based on the total weight of the polyphenylene ether, the polystyrene, the block copolymer, and the flame retardant.

15. An article comprising the foamed composition of any of claims 1 to 10, preferably wherein the article is an extruded foam sheet.
